# EUROPÄISCHE PATENTSCHRIFT

(11) **EP 2 349 707 B1**
(45) Veröffentlichungstag und Bekanntmachung des Hinweises auf die Patenterteilung: **13.03.2013**
(21) Anmeldenummer: 09820284.9
(22) Anmeldetag: 15.10.2009
(51) Int. Cl.: B32B 3/10, E02D 31/02

(54) **WASSERDICHTE MEMBRAN**
WATERPROOF MEMBRANE
MEMBRANE ÉTANCHE À L'EAU

(30) Priorität: 15.10.2008 EP 08166677
(43) Veröffentlichungstag der Anmeldung: 03.08.2011
(73) Patentinhaber: Sika Technology AG, 6340 Baar (CH)
(72) Erfinder: WEBER, Ulrich, K., CH-8405 Winterthur (CH); KLOSTER, Magnus, 89165 Dietenheim (DE)
(74) Vertreter: Sika Patent Attorneys
(86) Internationale Anmeldenummer: PCT/EP2009/063444
(87) Internationale Veröffentlichungsnummer: WO 2010/043661

(56) Entgegenhaltungen:
- GB-A- 2 340 070
- US-A- 4 065 924

## Beschreibung

### Technisches Gebiet

Die Erfindung geht aus von einer wasserdichten Membran umfassend eine Schottschicht und eine Verbundschicht, welche an einer Seite der Schottschicht angeordnet ist, nach dem Oberbegriff des ersten Anspruches.

Die Erfindung geht weiter aus von einem Formteil umfassend eine wasserdichte Membran, einem wasserdichten Formteil sowie einem Verfahren zur Abdichtung von Untergründen.

### Stand der Technik

Zur Abdichtung von Untergründen gegen Wasserdurchstoss sind in der Baubranche wasserdichte Membranen bekannt. Beispielsweise beschreibt US 4065924 eine Schottschicht verbunden mit einer Verbundschicht, wobei die Schottschicht auf dem Untergrund angeordnet ist und die Verbundschicht den Verbund mit dem aufgetragenen Beton gewährleistet, indem sie von dem aufgetragenen Beton durchsetzt wird.

Der Nachteil solcher Abdichtungen ist jedoch, dass sich die Schottschicht von der Verbundschicht lösen kann und sich dazwischen Hohlräume bilden können. Weiterhin kann der Verbund zwischen Schottschicht und der Verbundschicht produktionsbedingt nicht vollständig sein oder die Verbundschicht wird nicht vollständig mit aufgetragenen Beton durchsetzt. Dies alles kann zu Hohlräumen führen, durch die sich Flüssigkeiten ausbreiten können. Im Falle eines Lecks in der Schottschicht, beispielsweise durch hineinwachsende Wurzeln, Materialermüdung oder durch Zug- oder Scherkräfte, kann eindringendes Wasser die Schottschicht durch diese zusammenhängenden Hohlräume hinterlaufen. Dadurch werden einerseits grosse Bereiche von eingedrungenem Wasser betroffen und andererseits ist die genaue Lokalisierung des Lecks schwierig.

### Darstellung der Erfindung

Aufgabe der vorliegenden Erfindung ist es daher, eine wasserdichte Membran der eingangs genannten Art dahingehend zu verbessern, die Ausdehnung der Hohlräume entlang der Schottschicht und damit die Grösse der vom eingedrungenen Wasser hinterlaufenen Bereiche zu minimieren.

Erfindungsgemäss wird dies durch die Merkmale des ersten Anspruches erreicht.

Kern der Erfindung ist es also, dass bei einer wasserdichten Membran umfassend einer Schottschicht und einer Verbundschicht ein Dichtmittel diskontinuierlich zwischen Verbundschicht und Schottschicht angeordnet wird.

Die Vorteile der Erfindung sind unter anderem darin zu sehen, dass das Dichtmittel zwischen Verbundschicht und Schottschicht das Hinterlaufen der Schottschicht im Falle eines Lecks in der Schottschicht erschwert, respektive verhindert. Insbesondere werden Hohlräume, die sich zwischen mit Beton versetzter Verbundschicht und Schottschicht bilden, durch das Dichtmittel unterbrochen. Dadurch wird die Grösse der vom eingedrungenen Wasser hinterlaufenen Bereiche eingeschränkt. Der Schaden durch das eingedrungene Wasser wird dadurch auf einen kleineren Bereich beschränkt und die Schadensstelle lässt dich dadurch leichter lokalisieren. Dies ist beispielsweise für das Beheben der Schadensstelle mit einer Rissinjektion besonders vorteilhaft.

Es ist besonders zweckmässig, wenn das Dichtmittel gitterartig angeordnet ist. Eine solche gitterartige Anordnung ist dahingehend von Vorteil, dass dadurch eine Vielzahl von Gitterzellen geschaffen wird, wovon jede einzelne von Dichtmittel umschlossen ist. Im Falle des Eindringens von Wasser, im Falle eines Lecks in der Schottschicht in einer solchen Gitterzelle, würde das Dichtmittel entlang der Gitterzelle die Ausbreitung ausserhalb der Gitterzelle erschweren, wobei die anschliessenden Gitterzellen die Ausbreitung der Flüssigkeit weiter erschweren, insbesondere verhindern.

Es ist weiter von Vorteil, wenn das Dichtmittel teilweise in die Verbundschicht eindringt. Dadurch werden Hohlräume in der Verbundschicht, durch die sich Flüssigkeiten ausbreiten können, durch das Dichtmittel unterbrochen.

Weitere vorteilhafte Ausgestaltungen der Erfindung ergeben sich aus den Unteransprüchen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien ist mit Pfeilen angegeben.

Es zeigen:
- Fig. 1: einen Querschnitt durch eine Schottschicht verbunden mit einer Verbundschicht aus dem Stand der Technik.
- Fig. 2: Querschnitte durch wasserdichte Membranen vor Zugabe von flüssigem Beton auf die Verbundschicht.

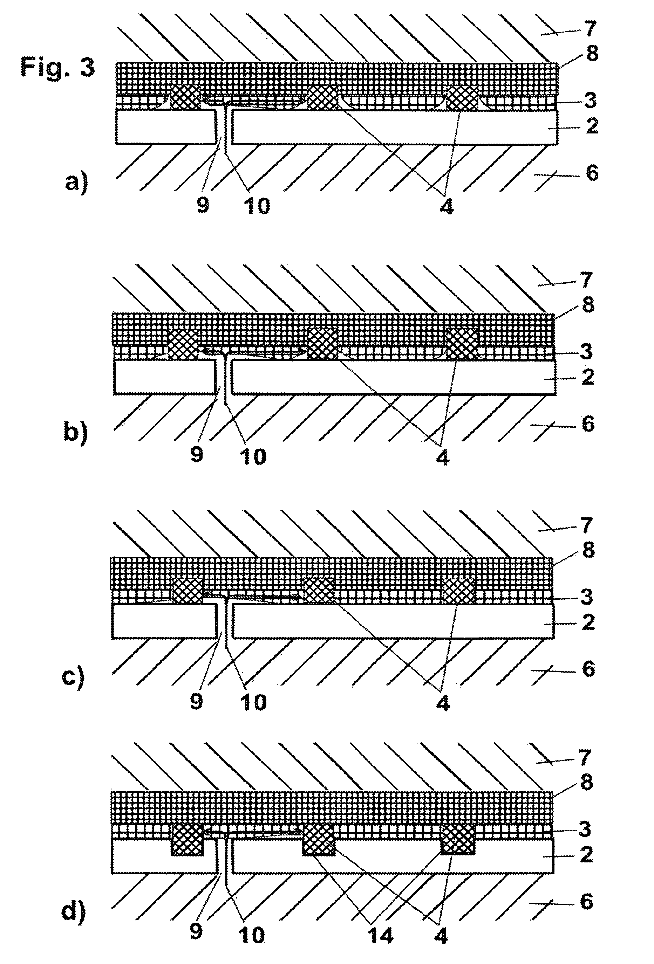

- Fig. 3: Querschnitte durch wasserdichte Membranen verbunden mit Beton. Das Dichtmittel hemmt die Ausbreitung von eingedrungener Flüssigkeit im Hohlraum zwischen mit Beton versetzter Verbundschicht und Schottschicht.
- Fig. 4: perspektivische schematische Darstellungen von Anordnungen des Dichtmittels der erfindungsgemässen wasserdichten Membran.
- Fig. 5: perspektivische schematische Darstellungen der Eindämmung der Ausbreitung von eingedrungenem Wasser durch gitterförmig angeordnetes Dichtmittel bei einer wasserdichten Membran.
- Fig.6: perspektivische schematische Darstellung von einem Formteil umfassend eine wasserdichte Membran und eine Schicht aus Isolationsmaterial.
- Fig. 7: perspektivische schematische Darstellung von einem wasserdichten Formteil.

Es sind nur die für das unmittelbare Verständnis der Erfindung wesentlichen Elemente gezeigt.

### Wege zur Ausführung der Erfindung

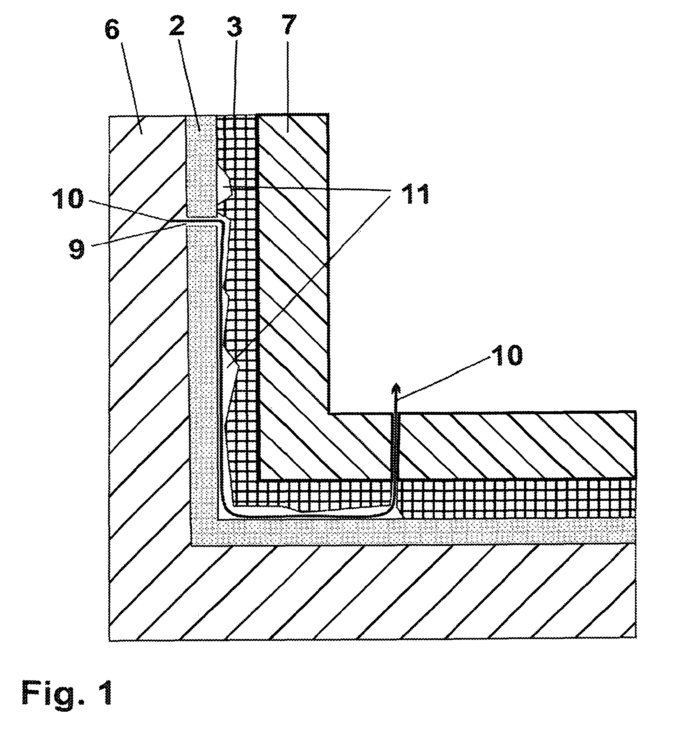

In Figur 1 ist ein Querschnitt durch eine Schottschicht verbunden mit einer Verbundschicht aus dem Stand der Technik gezeigt. Das Ablösen der Verbundschicht von der Schottschicht oder eine nicht vollständige Durchsetzung der Verbundschicht mit Beton kann zu Hohlräumen entlang der Schottschicht führen. Im Falle eines Lecks kann eindringendes Wasser die Schottschicht durch zusammenhängende Hohlräume grossflächig hinterlaufen. Ist einer dieser Hohlräume mit einem Riss in der Betonschicht verbunden, kann das eingedrungene Wasser durch diesen Riss den Beton durchdringen. In diesem Fall lässt die Austrittstelle des Wassers keine Rückschlüsse auf die Stelle des Lecks zu.

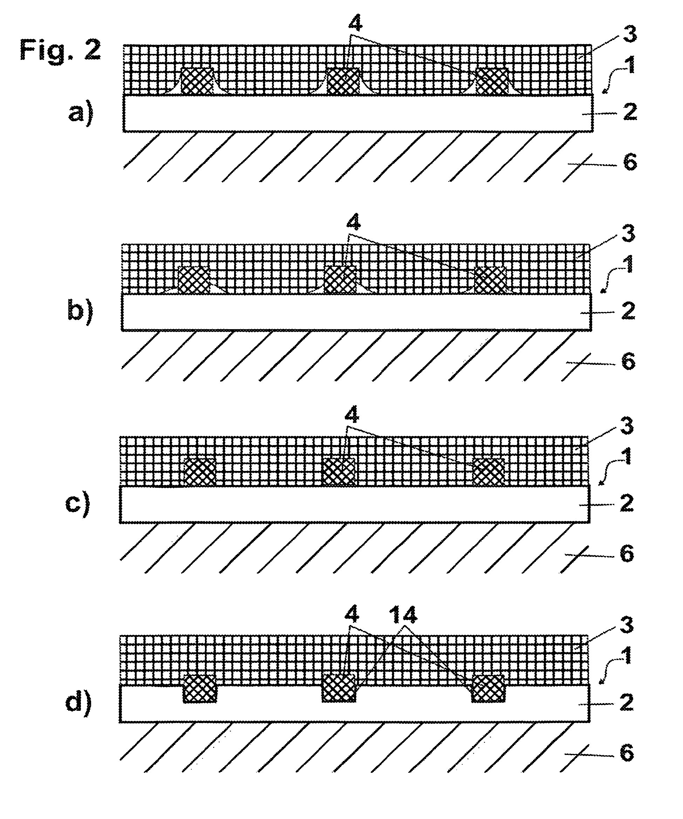

In den Figuren 2a bis 2d sind erfindungsgemässe wasserdichte Membranen 1 dargestellt, umfassend eine Schottschicht 2 und eine Verbundschicht 3, welche an einer Seite der Schottschicht angeordnet ist, und ein diskontinuierlich zwischen Verbundschicht und Schottschicht angeordnetes Dichtmittel 4.

Als Dichtmittel 4 kommen alle Materialien in Frage, welche geeignet sind, den Durchgang von Flüssigkeiten 10, insbesondere von Wasser, durch erwähnte Hohlräume 11 entlang der Schottschicht 2 zu reduzieren, respektive zu verhindern.

Weiter ist es von Vorteil, dass das Dichtmittel 4 im alkalischen pH-Bereich, insbesondere bedingt durch den Beton 7, stabil ist und seine Dichtfunktion wahrnehmen kann. Weiter ist es vorteilhaft, wenn das Dichtmittel eine hohe Beständigkeit gegen mögliche Zusatzstoffe der eindringenden Flüssigkeit 10 im Falle eines Lecks 9 in der Schottschicht 2 aufweist. Solche Zusatzstoffe sind typischerweise Salze, insbesondere bei salzwasserhaltigem Grundwasser, Calciumhydroxid, Schwefelhaltige Verbindungen sowie Lösungsmittel.

Vorteilhafterweise ist das Dichtmittel 4 ein Thermoplast oder ein thermoplastisches Elastomer. Thermoplastische Elastomere haben den Vorteil, dass das Dichtmittel dadurch über eine gute Elastizität gegenüber Horizontal- und Vertikalverschiebungen, insbesondere Verschiebungen der Schottschicht 2 und Verbundschicht 3, verfügt. Eine gute Elastizität des Dichtmittels verhindert ein Reissen oder Ablösen des Dichtmittels und somit ein Versagen der Dichtung.

Als thermoplastische Elastomere werden in diesem Dokument Kunststoffe verstanden, welche die mechanischen Eigenschaften von vulkanisierten Elastomeren mit der Verarbeitbarkeit von Thermoplasten vereinen. Typischerweise sind derartige thermoplastische Elastomere Block-Copolymere mit Hart- und Weichsegmenten oder so genannte Polymerlegierungen mit entsprechend thermoplastischen und elastomeren Bestandteilen.

Bevorzugte Thermoplaste und thermoplastische Elastomere sind insbesondere ausgewählt aus der Gruppe bestehend aus Polyethylen (PE), Low Density Polyethylen (LDPE), Ethylen/Vinylacetat-Copolymer (EVA), Polybuten (PB); thermoplastische Elastomere auf Olefinbasis (TPE-O, TPO) wie Ethylen-Propylen-Dien/Polypropylen-Copolymere; vernetzte thermoplastische Elastomere auf Olefinbasis (TPE-V, TPV); thermoplastische Polyurethane (TPE-U, TPU) wie TPU mit aromatischen Hartsegmenten und Polyester-Weichsegmenten (TPU-ARES), Polyether-Weichsegmenten (TPU-ARET), Polyester- und Polyether-Weichsegmenten (TPU-AREE) oder Polycarbonat-Weichsegmenten (TPU-ARCE); thermoplastische Copolyester (TPE-E, TPC) wie TPC mit Polyester-Weichsegmenten (TPC-ES), Polyether-Weichsegmenten (TPC-ET) oder mit Polyester- und Polyether-Weichsegmenten (TPC-EE); Styrol-Block-Copolymere (TPE-S, TPS) wie Styrol/Butadien-Block-Copolymer (TPS-SBS), Styrol/Isopren-Block-Copolymer (TPS-SIS), Styrol/Ethylen-Butylen/Styrol-Block-Copolymer (TPS-SEBS), Styrol/Ethylen-Propylen/Styrol-Block-Copolymer (TPS-SEPS); und thermoplastische Copolyamide (TPE-A, TPA).

Weitere vorteilhafte Dichtmittel 4 sind Dichtmittel, welche ausgewählt sind aus der Gruppe bestehend aus Acrylatverbindungen, Polyurethanpolymeren, Silan-terminierten Polymeren und Polyolefinen.

Bevorzugte Acrylatverbindungen sind insbesondere Acrylatverbindungen auf Basis von Acryl-Monomeren, insbesondere von Acryl- und Methacrylsäureestern.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Es ist weiter von Vorteil, wenn das Dichtmittel 4 ein Haftklebstoff und/oder ein Schmelzklebstoff ist. Dies gewährleistet einen guten Verbund und eine gute Haftung des Dichtmittels auf der Schottschicht 2, respektive auf der Verbundschicht 3 und vermindert somit das Ablösen des Dichtmittels und somit ein Versagen der Dichtung.

Haftklebstoffe und Schmelzklebstoff sind dem Fachmann allgemein bekannt und sind beschrieben in CD Römpp Chemie Lexikon, Version 1.0, Georg Thieme Verlag, Stuttgart.

Es ist weiter vorteilhaft, wenn das Dichtmittel 4 Quellstoffe enthält, welche bei Kontakt mit Wasser ihr Volumen auf ein mehrfaches vergrössern, typischerweise zwischen 200 - 1000% des ursprünglichen Volumens. Zusätzlich zur Volumenvergrösserung können gewisse Quellstoffe auch mit Wasser chemisch reagieren. Beispiele von solchen Quellstoffen sind Quellstoffe auf Polyurethanbasis, insbesondere silanmodifizierte Polymere, die durch Feuchtigkeit zu einem elastischen Produkt aushärten. Ein weiteres Beispiel für Quellstoffe sind Bentonit-Butyl-Kautschuke.

Vorteilhafterweise handelt es sich bei den Quellstoffen um Quellstoffe, die durch eine Beschichtung zeitlich verzögert mit Wasser reagieren, damit insbesondere während dem Kontakt mit feuchtem Beton die Quellstoffe nicht oder nur wenig quellen und für den Fall des Hinterlaufens der wasserdichten Membran 1 mit Flüssigkeit 10, insbesondere Wasser, quellfähig bleiben. Durch das Quellen der Quellstoffe im Falle der Hinterlaufens der wasserdichten Membran 1 kann das Dichtmittel 4 stärker gegen die Schottschicht 2 und/oder die mit Beton versetzte Verbundschicht 8 gedrückt werden, zusätzlich werden Hohlräume 11 durch die Volumenausdehnung des Quellstoffs verkleinert. Beides trägt dazu bei, den Durchgang von Wasser durch Hohlräume 11 entlang der Schottschicht 2 zu reduzieren, insbesondere zu verhindern.

Vorzugsweise ist das Dichtmittel 4 in einer Flächenstruktur und/oder gitterartig angeordnet.

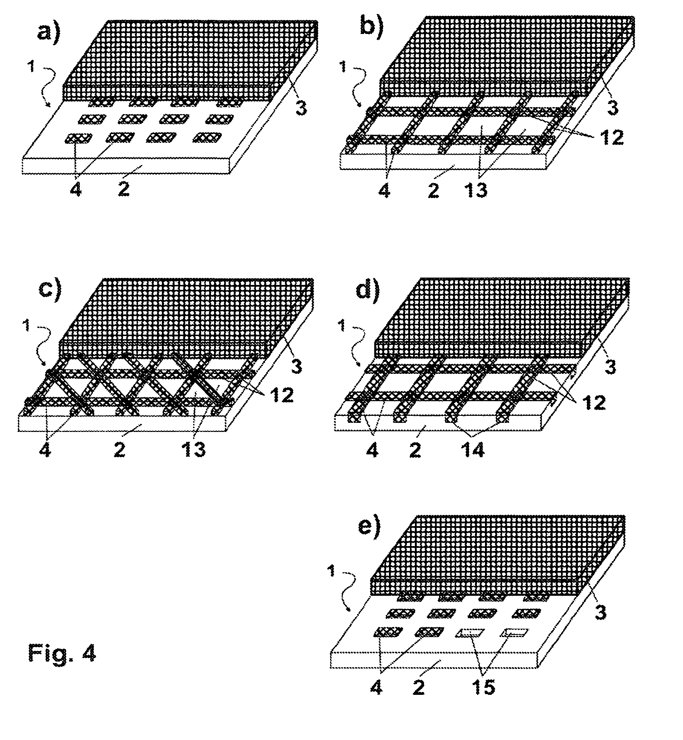

Eine solche Flächenstruktur ist beispielsweise in den Figuren 4a und 4e dargestellt, wobei in diesem Zusammenhang unter dem Begriff "Flächenstruktur" die Anordnung und Ausbildung des Werkstoffs im Raum und nicht die Oberflächenbeschaffenheit des Werkstoffs verstanden wird.

Die einzelnen Flächen können jede Grösse und Form aufweisen und gleichmässig angeordnet sein oder auch nicht. Der Vorteil einer Anordnung in einer Flächenstruktur liegt einerseits darin, dass die Herstellung einfacher ist, insbesondere wenn die einzelnen Flächen gleichmässig angeordnet sind und über eine gleiche Form und Fläche aufweisen. Andererseits ist, bedingt durch eine grosse Fläche, ein guter Verbund und eine gute Haftung des Dichtmittels 4 auf der Schottschicht 2, respektive auf der Verbundschicht 3 gewährleistet, was wiederum das Risiko eines Ablösen des Dichtmittels 4 und somit ein Versagen der Dichtung vermindert.

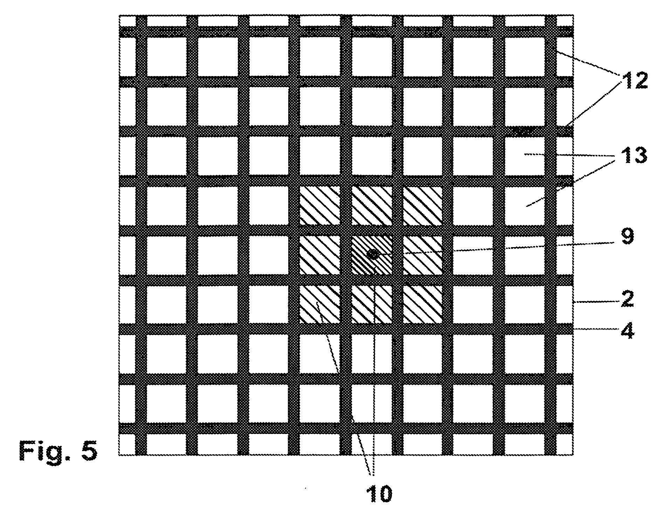

Eine gitterartige Anordnung des Dichtmittels 4, wobei das Dichtmittel die Gitterlinien 12 formt, ist beispielsweise in den Figuren 4b, 4c und 4d gezeigt. Die gitterartige Anordnung kann strukturiert sein oder auch nicht. Eine gitterartige Anordnung, insbesondere eine strukturierte gitterartige Anordnung ist dahingehend von Vorteil, dass dadurch gegenüber einer Anordnung in einer Flächenstruktur weniger Dichtmittel 4 benötigt wird. Ein weiterer Vorteil ist, dass durch die gitterartige Anordnung eine Vielzahl von Gitterzellen 13 geschaffen wird, wovon jede einzelne von Dichtmittel 4 umschlossen ist. Im Falle des Eindringens von Flüssigkeit 10 in eine solche Gitterzelle 13, würde das Dichtmittel 4 entlang der Gitterzelle 13 die Ausbreitung ausserhalb der Gitterzelle erschweren, insbesondere verhindern, wobei die anschliessenden Gitterzellen die Ausbreitung der Flüssigkeit 10 weiter erschweren, insbesondere verhindern. Dies ist beispielhaft in Figur 5 gezeigt, wobei die Dichte der Schraffur der Menge des eingedrungenen Flüssigkeit 10 entspricht.

Das Dichtmittel 4 kann teilweise, wie in Figur 2b gezeigt, oder auch vollständig in die Verbundschicht 3 eindringen, wie in Figur 2c gezeigt, insbesondere wenn es sich bei der Verbundschicht 3 um ein poröses Material handelt. Das Dichtmittel 4 kann auch gar nicht in die Verbundschicht 3 eindringen, wie das in Figur 2a gezeigt ist.

Im Fall, dass das Dichtmittel 4 vollständig in die Verbundschicht 3 eindringt, kann es insbesondere von Vorteil sein, dass die Verbundschicht 3 eine grössere Dicke aufweist als das Dichtmittel 4. Dadurch durchdringt das Dichtmittel die Dicke der Verbundschicht nicht vollständig, was den Vorteil haben kann, dass das Dichtmittel nicht auf die Oberfläche der der Schottschicht 2 abgewandten Seite der Verbundschicht 3 gelangt. Solches Dichtmittel 4, insbesondere wenn es sich um ein permanent klebriges Dichtmittel handelt, kann beim Aufrollen und Abrollen der wasserdichten Membranen 1, beim Transport und bei dem Begehen der wasserdichten Membranen vor dem Aufbringen des Betons 7 nachteilig sein.

Insbesondere kann das Dichtmittel 4 0 - 80%, bevorzugt 5 - 50%, insbesondere 10 - 30% der Dicke der Verbundschicht 3 durchdringen.

Dies ist insbesondere dahingehend von Vorteil, dass dadurch ein besserer Verbund und eine bessere Haftung des Dichtmittels mit der Verbundschicht entstehen. Weiterhin können dadurch Bereiche der Verbundschicht, insbesondere nahe der Schottschicht 2, welche wenig mit Beton 7 durchsetzt sind und dadurch eher für eingedrungene Flüssigkeit 10 durchlässig sind, abgedichtet werden.

Das Dichtmittel 4 hat daher bevorzugt eine Standfestigkeit, welche das Eindringen in die Verbundschicht 3 erlaubt, die Verbundschicht jedoch nur zum Teil, typischerweise weniger als 80% der Dicke der Verbundschicht durchdringt. Unter Standfestigkeit wird in diesem Dokument der Widerstand des Dichtmittels 4 gegen Abfliessen verstanden.

Teile der Verbundschicht 3 können direkt mit der Schottschicht 2 verbunden sein, insbesondere dort, wo sich kein Dichtmittel 4 zwischen Verbundschicht und Schottschicht befindet.

Unter "direkt verbunden" wird verstanden, dass keine weitere Schicht oder Substanz zwischen zwei Werkstoffen vorliegt und dass die zwei Werkstoffe direkt miteinander verbunden sind, beziehungsweise aneinander haften. Am Übergang zwischen zwei Werkstoffen können die zwei Werkstoffe ineinander vermischt vorliegen.

Die Verbundschicht 3 kann im Wesentlichen fest an der Schottschicht 2 angeordnet sein. Dies kann insbesondere dadurch erfolgt sein, dass bei der Herstellung der wasserdichten Membran 1 die Verbundschicht 3 und die Schottschicht 2 durch Wärmeeinwirkung, durch Druck, durch physikalische Absorption oder durch jede andere physikalische Krafteinwirkung direkt miteinander verbunden werden. Dies hat insbesondere den Vorteil, dass keine chemische Verbindung von Schottschicht und Verbundschicht mittels Klebstoffen notwendig ist, was sich vorteilhaft auf die Herstellungskosten der wasserdichten Membran 1 auswirkt. Insbesondere können Verbundschicht und Schottschicht durch Kaschieren miteinander verbunden werden. Durch Kaschieren kann ein starker Verbund zwischen Verbundschicht, insbesondere wenn es sich um ein Vlies handelt, und Schottschicht erreicht werden. Zusätzlich ist die Verbundsqualität bei der Herstellung von wasserdichten Membranen beim Kaschieren zuverlässiger und weniger Schwankungen bei den Produktionsparametern unterworfen als bei dem Verbund durch Klebstoffe.

Es besteht jedoch auch die Möglichkeit, Verbundschicht 3 und Schottschicht 2 durch Klebstoff miteinander zu verbinden.

Es ist weiterhin von Vorteil, wenn die Schottschicht 2 und/oder die Verbundschicht 3 eine flexible Kunststoffschicht ist.

Dies hat einerseits den Vorteil, dass die Schottschicht 2, respektive die Verbundschicht 3, dadurch über eine gute Elastizität gegenüber Horizontal- und Vertikalverschiebungen, verfügt. Andererseits erlaubt dies eine kostengünstige Herstellung und eine gute Witterungsbeständigkeit, insbesondere gegen tiefe Temperaturen und Feuchtigkeit. Des Weiteren erlauben flexible Kunststoffschichten, insbesondere wenn Schottschicht und Verbundschicht daraus bestehen, das Aufrollen der wasserdichten Membran 1, was den Transport sowie das Anbringen der wasserdichten Membran an dem Untergrund 6 erleichtert.

Die Schottschicht 2 kann aus allen Materialien bestehen, welche auch bei hohen Flüssigkeitsdrücken eine ausreichende Dichtheit gewährleisten.

Es ist also von Vorteil, wenn die Schottschicht 2 eine hohe Beständigkeit gegen Wasserdruck aufweist, sowie gute Werte in Weiterreissversuchen und Perforationsversuchen zeigt, was besonders bei mechanischen Belastungen auf Baustellen von Vorteil ist.

Es ist insbesondere von Vorteil, wenn die Schottschicht 2 eine Thermoplastschicht, vorzugsweise eine Polyethylenschicht ist. Daraus resultiert eine hohe Widerstandsfähigkeit gegenüber Umwelteinflüssen.

Vorzugsweise ist die Schottschicht 2 ausgewählt aus Materialien aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polyethylenterephthalat (PET), Polystyrol (PS), Polyvinylchlorid (PVC), Polyamide (PA), Ethylen-Vinylacetat (EVA), chlorsulfoniertes Polyethylen, Thermoplastische Polyolefine (TPO), Ethylen-Propylen-Dien-Kautschuk (EPDM) und Mischungen davon.

Die Schottschicht 2 kann eine Dicke von 0.1-5 mm, insbesondere 0.5 - 2.5 mm, bevorzugt 0.8-1.5 mm, aufweisen.

Durch Oberflächenbehandlungen wie beispielsweise Coronabehandlung, Fluorierung und Beflammung der Schottschicht 2 kann die Haftung der Verbundschicht 3 und des Dichtmittels 4, insbesondere des Dichtmittels, verbessert werden.

Es kann weiter von Vorteil sein, dass die Schottschicht 2 auf der der Verbundschicht 3 abgewanden Seite eine Beschichtung zur Erhöhung der Radondichtigkeit aufweist. Eine solche Beschichtung ist typischerweise eine metallische Beschichtung, insbesondere eine Beschichtung aus Aluminium. Es ist des Weiteren vorteilhaft, die Beschichtung zur Erhöhung der Radondichtigkeit zusätzlich mit einer Kunststoffschicht zu überziehen, um die Beschichtung vor mechanischer Beschädigung zu schützen. Beispielsweise kann eine Schottschicht aus Polyethylen mit tiefer Dichte (LDPE) auf der der Verbundschicht 3 abgewanden Seite eine Beschichtung aus Aluminium aufweisen, wobei die Beschichtung ihrerseits auf der der Schottschicht abgewanden Seite eine zusätzliche Schicht aus Polyethylen mit tiefer Dichte (LDPE) aufweist.

Es ist weiterhin von Vorteil, wenn die Schottschicht 2 eine Prägung 5, insbesondere eine rasterartige Prägung mit Rillen 14 , zur Aufnahme des Dichtmittels 4 aufweist, wie dies beispielsweise in den Figuren 2d und 4d gezeigt ist. Dies hat insbesondere den Vorteil, dass durch eine Erhöhung der Kontaktfläche zwischen Schottschicht 2 und Dichtmittel 4 ein verbesserter Verbund und ein bessere Haftung des Dichtmittels mit der Schottschicht resultieren, was wiederum das Risiko einer Ablösung des Dichtmittels und somit ein Versagen der Dichtung vermindert.

Des Weiteren kann dadurch der Verbund zwischen Schottschicht und Verbundschicht in den Bereichen nahe dem Dichtmittel verbessert werden, insbesondere durchgehend ausgebildet werden.

Eine rasterartige Prägung 5 mit Rillen 14 erlaubt eine rasterartige Anordnung des Dichtmittels 4, mit den Vorteilen wie sie vorhergehend erwähnt wurden

Auch Prägungen 5 mit Taschen 15 sind möglich, wie dies in Figur 4e gezeigt ist und bei der Herstellung der wasserdichten Membran 1 gegenüber einer rasterartigen Prägung mit Rillen 14 mit dem Vorteil der einfacheren Applikation des Dichtmittels 4 in die Taschen verbunden ist.

Die Prägung 5 kann typischerweise eine Tiefe von 0.1 - 10 mm, bevorzugt von 0.5 - 5 mm aufweisen, der Abstand zwischen den Rillen 14 oder Taschen 15 kann 0.5-30 mm, bevorzugt von 1-10 mm betragen.

Die Verbundschicht 3 kann aus allen Materialien bestehen, insbesondere aus solchen, welche von flüssigem Beton 7 gut durchdrungen werden und mit dem erhärteten Beton 7 einen guten Verbund ausbilden.

Unter dem Begriff "Verbundschicht" wird in diesem Dokument eine Schicht verstanden, die den Verbund zu dem aufgetragenen Beton 7 gewährleisten kann.

Die Verbundschicht 3 kann also eine im Wesentlichen feste Verbindung mit Beton 7 eingehen, wenn besagter Beton vor seiner Aushärtung mit der Verbundschicht in Kontakt gebracht wird.

Es ist vorteilhaft, wenn die Verbundschicht 3 aus einem porösen Material besteht. Eine poröse Struktur ist der Elastizität der Verbundschicht zuträglich, sie kann dadurch besser Zug- und Scherkräfte aushalten. Andererseits führt sie zu einer guten Aufnahme von flüssigem Beton und somit zu einem guten Verbund mit dem flüssigen sowie dem ausgehärteten Beton 7. Dies kann insbesondere bei grossen Flächenneigungswinkeln von Vorteil sein, damit der Beton nicht auf der Verbundschicht abrutscht.

Vorzugsweise ist die Verbundschicht 3 ein Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen von flüssigem Beton.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebauter Körper kann mechanisch verfestigt werden durch Vernadeln, Vermaschen oder durch Verwirbeln mittels scharfer Wasserstrahlen.

Besonders bevorzugt als Faserwerkstoff ist ein Filz oder Vlies.

Solche Schichten aus Faserwerkstoffen bieten dieselben Vorteile wie sie vorgehend für die porösen Materialien erwähnt wurden und haben geringe Herstellkosten. Weiterhin haben sie, sowie die porösen Materialien, den Vorteil, dass sie im Wesentlichen fest an die Schottschicht 2 angeordnet werden können, durch Wärmeeinwirkung, durch Druck, durch physikalische Adsorption oder durch jede andere physikalische Krafteinwirkung, wie das vorgängig erwähnt wurde.

Weiter können Faserwerkstoffe in der Regel sehr gleichmässig hergestellt werden, wodurch eine vergleichbare Durchdringung mit Beton 7 erreicht werden kann.

Es ist weiter von Vorteil, wenn die Verbundschicht 3 das Dichtmaterial 4 und insbesondere die Schottschicht 2 vor mechanischen Belastungen schützen kann. Insbesondere beim Verlegen der wasserdichten Membran 1 und vor und während der Applikation des flüssigen Betons kann es zu starken mechanischen Belastungen, beispielsweise bei Begehung der wasserdichten Membran, durch das Verlegen von Armierungseisen oder beim Anbringen des flüssigen Betons. Es ist daher vorteilhaft, wenn die Verbundschicht 3 ein gewisses Flächengewicht aufweist und somit eine gewisse Druckwiderstandsfähigkeit gegen mechanische Belastungen aufweist.

Vorteilhafterweise ist die Verbundschicht 3 ein thermoplastisches Material und das Material ist ausgewählt aus der Gruppe umfassend Polyethylen mit hoher Dichte (HDPE), Polyethylenterephthalat (PET), Polystyrol (PS), Polypropylen (PP), Polyvinylchlorid (PVC), Polyamid (PA) und Kombinationen davon.

Weiterhin kann die Verbundschicht 3 eine Dicke von 0.5 - 30 mm, bevorzugt 2-10 mm aufweisen.

Die wasserdichte Membran 1 kann auf jede Art und Weise hergestellt werden. Insbesondere können die wasserdichten Membranen auf handelsüblichen Maschinen hergestellt werden. Die wasserdichten Membranen können in einem einzigen Verfahrensschritt als Endlosware, beispielsweise durch Extrusion und/oder Kalandrieren und/oder Kaschieren, hergestellt werden und beispielsweise auf Rollen aufgerollt werden. Die Massetemperatur im Extruder oder Kalander kann in einem Bereich von 100°C - 200°C, bevorzugt 120°C - 170°C insbesondere 130°C - 150°C, liegen, bevorzugt während der Extrusion und/oder dem Kalandrieren und/oder dem Kaschieren.

Das Dichtmittel 4 kann durch Schlitzdüsen auf die Schottschicht 2 aufgetragen werden, typischerweise kurz vor dem Verbinden der Schottschicht mit der Verbundschicht 3. Es ist vorteilhaft, dass das Dichtmittel 4 eine Zusammensetzung und eine Standfestigkeit aufweist, die mit den Temperaturen der Herstellung der wasserdichten Membran 1 verträglich ist.

Insbesondere wird die Verbundschicht 3 durch Kaschieren mit der Schottschicht 2 verbunden, typischerweise kurz nachdem das Dichtmittel 4 auf die Schottschicht aufgebracht wurde oder gleichzeitig.

Des Weiteren umfasst die Erfindung ein Formteil 16 umfassend eine wasserdichte Membran 1, wie sie vorgehend beschrieben wurde und eine Schicht aus Isolationsmaterial 17.

Das Isolationsmaterial, insbesondere Wärme- und/oder Schallisolationsmaterial, ist typischerweise geschäumtes Polystyrol, geschäumtes Polyurethan, Mineralwolle oder geschäumtes Glas (Foamglas) oder Kombinationen davon.

Die Schicht aus Isolationsmaterial 17 hat typischerweise eine Dicke von 1 - 50 cm.

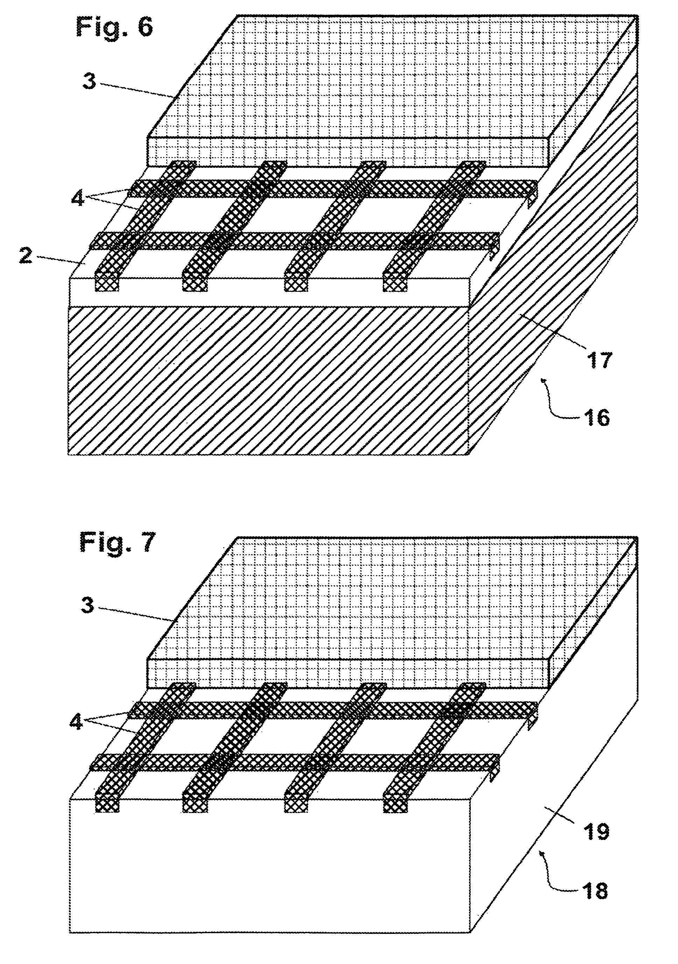

Typischerweise ist das Formteil 16 ein Fertigteil-Element, insbesondere eine Platte, wie es in Figur 6 dargestellt ist. Ein solches Formteil ist dahingehen von Vorteil, dass Isolationsmaterial und wasserdichte Membran 1 in einem Arbeitsschritt angebracht werden können. Solche Formteile sind besonders für wasserdurchlässige Isolationsmaterialien geeignet, wobei die Schottschicht 2 Flüssigkeiten am Weiterkommen hindert.

Des Weiteren umfasst die Erfindung ein wasserdichtes Formteil 18 umfassend eine Schottschicht 2, eine Verbundschicht 3, welche an einer Seite der Schottschicht angeordnet ist, sowie ein Dichtmittel 4, diskontinuierlich angeordnet zwischen Verbundschicht und Schottschicht, wobei die Schottschicht aus einem wasserdichten Isolationsmaterial besteht.

Das wasserdichte Isolationsmaterial entspricht dem vorgehend beschriebenen Isolationsmaterial, mit der Vorgabe, dass das Isolationsmaterial wasserundurchlässig ist. Die Schicht aus wasserdichtem Isolationsmaterial 19 hat typischerweise eine Dicke von 1-50 cm.

Die Verbundschicht 3 und das Dichtmittel 4 des wasserdichten Formteils 18 entsprechen der Verbundschicht und dem Dichtmittel wie sie für die wasserdichte Membran 1 erwähnt werden.

Typischerweise ist das Formteil ein Fertigteil-Element, insbesondere eine Platte, wie es in Figur 7 dargestellt ist. Das wasserdichte Formteil 18 bietet dieselben Vorteile wie sie vorhergehend für das Formteil 16 erwähnt wurden.

Des Weiteren umfasst die Erfindung ein Verfahren zur Abdichtung von Untergründen 6, umfassend die Schritte:
i) Applizieren einer wasserdichten Membran 1 wie vorhergehend erwähnt an einen Untergrund 6, wobei die Schottschicht 2 der wasserdichten Membran gegen den Untergrund gerichtet ist,
ii) Applizieren von flüssigem Beton 7 auf die Verbundschicht 3 der wasserdichten Membran 1.

Unter flüssigem Beton wird in diesem Dokument Beton 7 vor dem Aushärten verstanden. Der Beton 7 kann Teil von einem Bauwerk, insbesondere ein Bauwerk aus dem Hoch- oder Tiefbau wie beispielsweise ein Gebäude, Garage, Tunnel, Deponie, Wasserrückhaltebecken, Deich oder ein Element für den Fertigteilbau sein.

Der flüssige Beton 7 wird üblicherweise auf und/oder an die Verbundschicht 3 gegossen, und kann in die Verbundschicht eindringen. Es ist insbesondere von Vorteil, wenn der flüssige Beton die Verbundschicht vollständig durchsetzt. Nach dem Aushärten des Beton bildet sich typischerweise ein im Wesentlicher fester Verbund zwischen dem ausgehärteten Beton 7 und der Verbundschicht 3 und somit zu der wasserdichten Membran 1, insbesondere wenn der Beton in seinem flüssigen Zustand die Verbundschicht vollständig durchsetzt hat.

Es ist jedoch auch von Vorteil, wenn der flüssige Beton die Verbundschicht nicht vollständig durchsetzt. Nach dem Aushärten des Beton bildet sich eine der Schottschicht 2 zugewandter Teil der Verbundschicht 3, die nicht von Beton 7 durchsetzt ist, welche dadurch über eine grössere Elastizität gegenüber Horizontal- und Vertikalverschiebungen, insbesondere Verschiebungen der Schottschicht und Verbundschicht, als der von Beton durchsetzte Teil der Verbundschicht 8. Die höhere Elastizität der nicht von Beton durchsetzten Verbundschicht kann dem Reissen oder Ablösen des Dichtmittels 4 und/oder der Schottschicht 2 entgegenwirken. Des Weiteren können dadurch Risse im Beton 7 besser überbrückt werden.

Der Untergrund 6 kann dabei waagrecht sein oder auch nicht. Er kann weiterhin das Erdreich, ein Bauwerk oder eine Schalung sein. Typischerweise handelt es sich bei dem Untergrund um eine vertikal-positionierte Schalung aus Holz oder Stahlträgern. Beim Untergrund kann es sich auch um Isolationsmaterial handeln.

Typischerweise beinhaltet das Verfahren zusätzlich einen Schritt zur Befestigung der wasserdichten Membran 1 an dem Untergrund 6. Dieser Schritt findet insbesondere nach dem Anbringen der wasserdichten Membran an dem Untergrund statt, typischerweise durch mechanisches Befestigen und/oder Verkleben.

Des Weiteren umfasst die Erfindung die Verwendung einer wasserdichten Membran 1 wie vorhergehend erwähnt wurde zur Abdichtung von Untergründen 6.

Selbstverständlich ist die Erfindung nicht auf die gezeigten und beschriebenen Ausführungsbeispiele beschränkt.

### Bezugszeichenliste

- 1: Wasserdichte Membran
- 2: Schottschicht
- 3: Verbundschicht
- 4: Dichtmittel
- 5: Prägung
- 6: Untergrund
- 7: Beton
- 8: Verbundschicht mit Beton versetzt
- 9: Leck
- 10: Flüssigkeit
- 11: Hohlraum
- 12: Gitterlinie
- 13: Gitterzelle
- 14: Rille
- 15: Tasche
- 16: Formteil
- 17: Schicht aus Isolationsmaterial
- 18: Wasserdichtes Formteil
- 19: Schicht aus wasserdichtem Isolationsmaterial

## Patentansprüche

1. Wasserdichte Membran (1) umfassend:
eine Schottschicht (2),
eine Verbundschicht (3), welche an einer Seite der Schottschicht (2) angeordnet ist, **dadurch gekennzeichnet,**
**dass** ein Dichtmittel (4) diskontinuierlich zwischen Verbundschicht (3) und Schottschicht (2) angeordnet ist.

2. Wasserdichte Membran gemäss Anspruch 1, **dadurch gekennzeichnet, dass** das Dichtmittel (4) ein Thermoplast oder ein thermoplastisches Elastomer ist.

3. Wasserdichte Membran gemäss einem der vorhergehenden Ansprüche, **dadurch gekennzeichnet, dass** das Dichtmittel (4) ausgewählt ist aus der Gruppe bestehend aus Acrylatverbindungen, Polyurethanpolymeren, Silan-terminierten Polymeren und Polyolefinen.

4. Wasserdichte Membran gemäss einem der vorhergehenden Ansprüche, **dadurch gekennzeichnet, dass** das Dichtmittel (4) ein Haftklebstoff und/oder ein Schmelzklebstoff ist.

5. Wasserdichte Membran gemäss einem der vorhergehenden Ansprüche, **dadurch gekennzeichnet, dass** das Dichtmittel (4) in einer Flächenstruktur und/oder gitterartig angeordnet ist.

6. Wasserdichte Membran gemäss einem der vorhergehenden Ansprüche, **dadurch gekennzeichnet, dass** das Dichtmittel (4) 0 - 80%, bevorzugt 5 - 50%, insbesondere 10 - 30% der Dicke der Verbundschicht (3) durchdringt.

7. Wasserdichte Membran gemäss einem der vorhergehenden Ansprüche, **dadurch gekennzeichnet, dass** Teile der Verbundschicht (3) direkt mit der Schottschicht (2) verbunden sind.

8. Wasserdichte Membran gemäss einem der vorhergehenden Ansprüche, **dadurch gekennzeichnet, dass** die Schottschicht (2) und/oder die Verbundschicht (3) eine flexible Kunststoffschicht ist.

9. Wasserdichte Membran gemäss einem der vorhergehenden Ansprüche, **dadurch gekennzeichnet, dass** die Schottschicht (2) eine Thermoplastschicht, vorzugsweise eine Polyethylenschicht ist.

10. Wasserdichte Membran gemäss einem der vorhergehenden Ansprüche, **dadurch gekennzeichnet, dass** die Schottschicht (2) eine Dicke von 0.1 - 5 mm, bevorzugt 0.5 - 2.5 mm, insbesondere 0.8 - 1.5 mm, aufweist.

11. Wasserdichte Membran gemäss einem der vorhergehenden Ansprüche, **dadurch gekennzeichnet, dass** die Schottschicht (2) eine Prägung (5), insbesondere eine rasterartige Prägung, zur Aufnahme des Dichtmittels (4) aufweist.

12. Wasserdichte Membran gemäss einem der vorhergehenden Ansprüche, **dadurch gekennzeichnet, dass** die Verbundschicht (3) aus einem porösen Material besteht.

13. Wasserdichte Membran gemäss einem der vorhergehenden Ansprüche, **dadurch gekennzeichnet, dass** die Verbundschicht (3) ein Faserwerkstoff, insbesondere ein Filz oder Vlies ist.

14. Formteil (16) umfassend eine wasserdichte Membran (1) gemäss einem der Ansprüche 1-13 und eine Schicht aus Isolationsmaterial (17).

15. Wasserdichtes Formteil (18) umfassend eine Schottschicht (2), eine Verbundschicht (3), welche an einer Seite der Schottschicht (2) angeordnet ist, sowie ein Dichtmittel (4), diskontinuierlich angeordnet zwischen Verbundschicht (3) und Schottschicht (2) gemäss einem der Ansprüche 1 - 8 und 11 - 13, **dadurch gekennzeichnet, dass** die Schottschicht (2) aus einem wasserdichten Isolationsmaterial besteht.

16. Verfahren zur Abdichtung von Untergründen (6) umfassend die Schritte:
i) Anbringen einer wasserdichten Membran (1) nach einem der Ansprüche 1 - 13 an einen Untergrund (6), wobei die Schottschicht (2) der wasserdichten Membran (1) gegen den Untergrund (6) gerichtet ist,
ii) Aufbringen von flüssigem Beton (7) auf die Verbundschicht (3) der wasserdichten Membran (1).

## Claims

1. Water-tight membrane (1) that comprises:
a barrier layer (2),
a composite layer (3), which is arranged on one side of the barrier layer (2),
**characterized in that** a sealant (4) is arranged intermittently between the composite layer (3) and the barrier layer (2).

2. Water-tight membrane according to Claim 1, wherein the sealant (4) is a thermoplastic or a thermoplastic elastomer.

3. Water-tight membrane according to one of the preceding claims, wherein the sealant (4) is selected from the group that consists of acrylate compounds, polyurethane polymers, silane-terminated polymers and polyolefins.

4. Water-tight membrane according to one of the preceding claims, wherein the sealant (4) is a contact adhesive and/or a melt adhesive.

5. Water-tight membrane according to one of the preceding claims, wherein the sealant (4) is arranged in a surface structure and/or like a mesh.

6. Water-tight membrane according to one of the preceding claims, wherein the sealant (4) penetrates 0 - 80%, preferably 5 - 50%, and in particular 10 - 30% of the thickness of the composite layer (3).

7. Water-tight membrane according to one of the preceding claims, wherein parts of the composite layer (3) are connected directly to the barrier layer (2).

8. Water-tight membrane according to one of the preceding claims, wherein the barrier layer (2) and/or the composite layer (3) is/are a flexible plastic layer.

9. Water-tight membrane according to one of the preceding claims, wherein the barrier layer (2) is a thermoplastic layer, preferably a polyethylene layer.

10. Water-tight membrane according to one of the preceding claims, wherein the barrier layer (2) has a thickness of 0.1 - 5 mm, preferably 0.5-2.5 mm, and in particular 0.8 - 1.5 mm.

11. Water-tight membrane according to one of the preceding claims, wherein the barrier layer (2) has an embossing (5), in particular a gridlike embossing for receiving sealant (4).

12. Water-tight membrane according to one of the preceding claims, wherein the composite layer (3) consists of a porous material.

13. Water-tight membrane according to one of the preceding claims, wherein the composite layer (3) is a fiber material, in particular a felt or a non-woven material.

14. Preformed part (16) that comprises a water-tight membrane (1) according to one of Claims 1 -13, and a layer that consists of insulation material (17).

15. Water-tight preformed part (18) that comprises a barrier layer (2), a composite layer (3), which is arranged on one side of the barrier layer (2), as well as a sealant (4) that is intermittently arranged between the composite layer (3) and the barrier layer (2) according to one of Claims 1 - 8 and 11-13, wherein the barrier layer (2) consists of a water-tight insulation material.

16. Method for sealing foundations (6) comprising the steps:
i) Installation of a water-tight membrane (1) according to one of Claims 1 -13 on a foundation (6), whereby the barrier layer (2) of the water-tight membrane (1) is directed against the foundation (6),
ii) Application of liquid concrete (7) on the composite layer (3) of the water-tight membrane (1).

## Revendications

1. Membrane étanche à l'eau (1), comprenant :
une couche de cloisonnement étanche (2),
une couche de liaison (3) qui est aménagée sur une face de la couche de cloisonnement étanche (2), **caractérisée en ce que**
un agent d'étanchéité (4) est aménagé en discontinu entre la couche de liaison (3) et la couche de cloisonnement étanche (2).

2. Membrane étanche à l'eau selon la revendication 1, **caractérisée en ce que** l'agent d'étanchéité (4) est un matériau thermoplastique ou un élastomère thermoplastique.

3. Membrane étanche à l'eau selon l'une quelconque des revendications précédentes, **caractérisée en ce que** l'agent d'étanchéité (4) est choisi dans le groupe constitué des composés acrylates, des polymères de polyuréthanes, des polymères à terminaison silane et des polyoléfines.

4. Membrane étanche à l'eau selon l'une quelconque des revendications précédentes, **caractérisée en ce que** l'agent d'étanchéité (4) est une colle autocollante et/ou une colle fusible.

5. Membrane étanche à l'eau selon l'une quelconque des revendications précédentes, **caractérisée en ce que** l'agent d'étanchéité (4) est aménagé dans une structure superficielle et/ou en réseau.

6. Membrane étanche à l'eau selon l'une quelconque des revendications précédentes, **caractérisée en ce que** l'agent d'étanchéité (4) pénètre sur 0 à 80 %, de préférence sur 5 à 50 %, en particulier sur 10 à 30 % de l'épaisseur de la couche de liaison (3).

7. Membrane étanche à l'eau selon l'une quelconque des revendications précédentes, **caractérisée en ce que** des parties de la couche de liaison (3) sont directement liées à la couche de cloisonnement étanche (2).

8. Membrane étanche à l'eau selon l'une quelconque des revendications précédentes, **caractérisée en ce que** la couche de cloisonnement étanche (2) et/ou la couche de liaison (3) forme(nt) une couche plastique souple.

9. Membrane étanche à l'eau selon l'une quelconque des revendications précédentes, **caractérisée en ce que** la couche de cloisonnement étanche (2) est une couche de matériau thermoplastique, de préférence une couche de polyéthylène.

10. Membrane étanche à l'eau selon l'une quelconque des revendications précédentes, **caractérisée en ce que** la couche de cloisonnement étanche (2) présente une épaisseur de 0,1 à 5 mm, de préférence de 0,5 à 2,5 mm, en particulier de 0,8 à 1,5 mm.

11. Membrane étanche à l'eau selon l'une quelconque des revendications précédentes, **caractérisée en ce que** la couche de cloisonnement étanche (2) présente un gaufrage (5), en particulier un gaufrage en réseau pour recevoir l'agent d'étanchéité (4).

12. Membrane étanche à l'eau selon l'une quelconque des revendications précédentes, **caractérisée en ce que** la couche de liaison (3) est constituée d'un matériau poreux.

13. Membrane étanche à l'eau selon l'une quelconque des revendications précédentes, **caractérisée en ce que** la couche de liaison (3) est un matériau fibreux, en particulier un feutre ou un non tissé.

14. Préformé (16) comprenant une membrane étanche à l'eau (1) selon l'une quelconque des revendications 1 à 13 et une couche de matériau isolant (17).

15. Préformé étanche à l'eau (18) comprenant une couche de cloisonnement étanche (2), une couche de liaison (3), qui est aménagée sur une face de la couche de cloisonnement étanche (2), ainsi qu'un agent d'étanchéité (4), agencé en discontinu entre la couche de liaison (3) et la couche de cloisonnement étanche (2) selon l'une quelconque des revendication 1 à 8 et 11 à 13, **caractérisé en ce que** la couche de cloisonnement étanche (2) est constituée d'un matériau insolant étanche à l'eau.

16. Procédé pour étancher des supports (6), comprenant les étapes consistant à :
i) appliquer une membrane étanche à l'eau (1) selon l'une quelconque des revendications 1 à 13 à un support (6), la couche de cloisonnement étanche (2) de la membrane étanche à l'eau (1) étant tournée vers le support (6), et
ii) appliquer du béton liquide (7) sur la couche de liaison (3) de la membrane étanche à l'eau (1).
